# EUROPÄISCHE PATENTANMELDUNG

(11) **EP 3 627 131 A1**
(43) Veröffentlichungstag der Anmeldung: **25.03.2020**
(21) Anmeldenummer: 19198646.2
(22) Anmeldetag: 20.09.2019
(51) Int. Cl.: G01M 5/00

(54) **VERFAHREN UND EINRICHTUNG ZUR ÜBERWACHUNG EINES BAUWERKS**

(30) Priorität: 20.09.2018 DE 102018123142
(71) Anmelder: IGUS Ingenieurgemeinschaft Umweltschutz Meß- und Verfahrenstechnik G.m.b.H., 01109 Dresden (DE)
(72) Erfinder: Volkmer, Peter, 01109 Dresden (DE)
(74) Vertreter: Gottfried, Hans-Peter

(57) **Zusammenfassung**

Die Erfindung betrifft ein Verfahren und eine Einrichtung zur Überwachung des Zustands eines Bauwerks (1) an wenigstens einer Stelle mittels wenigstens einen Sensors. Nach der Erfindung werden für wenigstens ein Bauwerkselement (4, 6, 8) zumindest Schwingungen mittels wenigstens eines Schwingungssensors (S) gemessen und aus den Messergebnissen wenigstens ein Schwingungsspektrum in wenigstens einer Schwingungsrichtung bestimmt, wobei das Schwingungsspektrum zumindest eine Eigenfrequenz berücksichtigt und in Hinsicht auf Abweichungen gegenüber einer Referenz, die Rückschlüsse auf bauliche Veränderungen des Bauwerkselements ermöglichen, bewertet wird

## Beschreibung

Die Erfindung betrifft ein Verfahren und eine Einrichtung zur Überwachung des baulichen Zustands eines Bauwerks, insbesondere eines Brückenbauwerks, an wenigstens einer Stelle mittels wenigstens einem Sensor, mit dem Schwingungsspektren des Bauwerks bestimmt und aus deren geeigneter Bewertung Erkenntnisse zum baulichen Zustand gewonnen werden.

Der Einbruch bedeutender Brücken - z. B. die Reichsbrücke über die Donau in Wien 1976, die Brücke über den Fluss Douro in Portugal im Jahr 2001 oder die Autobahnbrücke über Genua 2018 - gibt Anlass, die bisherige Überwachung dieser Bauwerke auf eine neue, zeitgemäße Stufe zu stellen. Ebenso ist festzustellen, dass infolge zunehmenden Verkehrs die vorhandenen Brücken immer mehr an ihre Belastungsgrenzen kommen.

Brückenbauwerke bestehen aus Tragwerken, ausgebildet als Spannelemente und/oder Stützelemente, sowie den darauf gehaltenen Fahrbahnelementen, ausgeführt als steife Platten oder Spannbauelemente. Die Tragwerke leiten die Last der Fahrbahnelemente und die Nutzlasten in Form von Drucklasten oder als Anker-Zuglasten in den Untergrund ab.

Fahrbahnen sind Biegungen durch Eigen- und Nutzlasten ausgesetzt. Schäden an den Fahrbahnen treten in Form von Rissen durch zu hohe Nutzlasten, durch korrosive Materialschäden oder Materialveränderungen, z. B. durch zu weit fortgeschrittene Lastwechsel-Ermüdungen und Alterungen, auf. Der Extremfall ist der Bruch der Fahrbahn. Bei den Tragwerken sind vor allem die Spannelemente von Schäden betroffen, die dazu führen können, dass die Fahrbahn teilweise oder gar überhaupt nicht mehr gehalten werden kann.

Schließlich werden Schäden an Brücken durch Veränderungen im Untergrund hervorgerufen. Sie wirken sich letztlich auch auf die Tragwerke und Fahrbahnen aus, indem dort zusätzliche Verschiebungs- und Verdrehungslasten auftreten.

Die Überprüfung des baulichen Zustands der Brücken erfolgt gegenwärtig nur mit aufwendigen manuellen visuell-optischen Begutachtungen insbesondere der statisch wirksamen Bauwerkselemente und eine manuelle mechanische Prüfung z. B. mittels geeigneter Prüfhammerschläge. Dabei werden teilweise auch Eigenschwingungen der Brückenelemente angeregt, die dann ebenfalls zur subjektiven Bewertung herangezogen werden können. Diese Brückenprüfungen werden in einem Abstand von 6 Jahren bzw. in vereinfachter Form aller drei Jahre durch qualifizierte Prüfingenieure durchgeführt. Dazu sind erhebliche personelle und materielle Aufwendungen erforderlich, um die Prüforte erreichen zu können.

Das sind sehr aufwendige Techniken, die nicht generell bei allen Brücken eingesetzt werden können, sondern nur bei Problemfällen, wo schon bei vorhergehen Untersuchungen Problem vermutet werden.

Es werden auch - wenn überhaupt möglich - mittels sehr aufwendiger, sehr stabiler Unterbauten unter Brückenbögen temporärer Messungen der Brücken-Durchbiegung unter verschiedenen Belastungen durchgeführt. Damit sind nur zeitlich punktuelle Brückenzustandsergebnisse zu erhalten, aber keine direkten Detailerkenntnisse über mögliche Zustandsveränderungen zu gewinnen.

Eine Methode, die diesen Aufwand verringert, da keine Unterbauten erforderlich sind, ist ein Messverfahren, bei dem ein Messsystem zum Einsatz kommt, das mehrere verbundene Schlauchwaagen-Sensoren umfasst. Die Schlauchwaagen-Sensoren werden dazu an geeigneten Stellen angebracht, insbesondere an gleich liegenden Niveaupunkten an Brückenkörpern. Deren Höhenlagen werden unter Belastung gleichzeitig vermessen, um damit eine Durchbiegung des Brückenkörpers insgesamt und einzelner Elemente relativ zueinander festzustellen. Dadurch kann der Brückenzustand bewertet werden. Bedingt durch die anzuwendende Abtastrate ist die Ermittlung eines umfassenden Spektrums nicht möglich.

Im Stand der Technik sind weitere Messverfahren beschrieben. Hierbei ist die Druckschrift DE 101 10 606 A1 zu nennen, nach der als Messgrößen mechanische und Umweltgrößen verwendet werden. Als Schlüsselmessgrößen werden zwei bei maximaler Versuchsbelastung beobachtete Risse sowie redundant dazu zwei Durchbiegungen in der Feldmitte der Hauptöffnung ausgewählt. Mehrere Temperatur-, Luftfeuchte- und Beschleunigungssensoren (letztere nur zur Signalauslösung bei der automatischen Erfassung von Überfahrten durch Fahrzeuge mit unzulässig hohem Gewicht) vervollständigten die zu beobachtenden Messgrößen. Als maßgebende Grenzwerte, deren dauerhafte Überschreitung eine beginnende Gefährdung des Tragwerkes signalisieren würde, wurde die beginnende Öffnung der beiden unter Normalbedingungen geschlossenen Risse ermittelt. Das Monitoring-System besteht in diesem Fall aus je zwei Rissweiten-, Neigungs-, Beschleunigungs- sowie Luftfeuchte- und Temperatursensoren, drei - nicht weiter erklärten - Multi-Sensor-Module und einem Master mit Kommunikationseinheit. Als Masterstandort wurde ein Pfeilerkopf gewählt; Energieversorgung und bidirektionale Datenübertragung erfolgen netz- bzw. drahtgebunden. Das Messregime sieht Messungen mit allen Sensoren (mit Ausnahme der Beschleunigungssensoren) alle zwei Stunden vor. Daneben ist die ereignisabhängige Erfassung von Überfahrten mit Fahrzeugmassen von 30 t im dynamischen Messmodus vorgesehen. Die Kommunikation mit dem Monitoring-System zwecks Datentransfer und Funktionskontrolle wird manuell oder automatisch hergestellt. Die Messphasen können bei der vorliegenden Aufgabenstellung auf z. B. je zwei Monate im Sommer und im Winter eingeschränkt werden. Auch der Schwingungssensor ist nur für die Ereigniserfassung vorgesehen. Eine Frequenzauswertung erfolgt nicht. Es wird zwar ein Monitoring erwähnt, aber das Monitoring ist zeitlich beschränkt und wird mit einer Vielzahl von nicht beschriebenen Auswertungen ausgeführt.

Die Druckschrift DE 195 31 858 B4 befasst sich mit den Abspannseilen von hohen Masten und auch nur mit Messungen auf Grundlage von mittels Schwingungsanregern eingeleiteten Schwingungen für die Eigenfrequenzen. Es wird jedoch nicht das gesamte Schwingungsspektrum aufgenommen, sondern nur die Haupt-Eigenfrequenzen.

Es ist daher Aufgabe der vorliegenden Erfindung, ein Verfahren und eine Einrichtung zur Überwachung eines Bauwerks, insbesondere einer Brücke, anzubieten, wobei die Überwachung des baulichen Zustands auf einfache Weise, erfolgen kann.

Die Aufgabe wird gelöst durch ein Verfahren zur Überwachung des baulichen Zustands eines Bauwerks, insbesondere einer Brücke, über wenigstens ein Monitoringsystem, das Sensoren umfasst, über die an mehreren, den aussagekräftigsten Stellen der Zustand des Bauwerks permanent überwacht wird. Nach der Erfindung werden für wenigstens ein Bauwerkselement zumindest Schwingungen mittels wenigstens eines Schwingungssensors gemessen und aus den Messergebnissen wenigstens ein Schwingungsspektrum in wenigstens einer Schwingungsrichtung bestimmt, wobei das Schwingungsspektrum zumindest eine Eigenfrequenz berücksichtigt und in Hinsicht auf Abweichungen gegenüber einer Referenz, die Rückschlüsse auf bauliche Veränderungen des Bauwerkselements ermöglichen, bewertet wird. Als Referenz kommen beispielweise gespeicherte Schwingungsspektren in Betracht, die aus früheren Messungen ermittelt, durch Simulationen oder auf andere Weise gewonnen wurden. Die Messung von Schwingungen erfolgt insbesondere im Frequenz-Bereich von 0 bis 100 Hz oder höher, je nach Bauwerk. Als Bauwerkselement werden beispielsweise ein Brückenbogen, ein Spannseil, ein Spannelement oder ein Pfeiler betrachtet.

Die Schwingungsspektren umfassen die Eigenfrequenzen und ihre Vielfachen, die sich als Peaks im Schwingungsspektrum zeigen. Mehrere Peaks bilden zusammen eine Peakgruppe. Neben den Eigenfrequenzen umfassen die Schwingungsspektren bzw. das als ein Schwingungsspektrum betrachtete Datenpaket vorteilhafterweise auch die Amplituden der Peaks sowie die Lage der Schwingungen im Raum, wobei neben Transversal- auch Longitudinal- und Torsionsschwingungen berücksichtigt werden können. Die Anordnungsgesamtheit der Peaks eines Spektrums oder Teile davon sind spezifisch für ein Bauwerkselement in einem bestimmten baulichen Zustand.

Mit dem erfindungsgemäßen Verfahren wird ein Bauwerks-Zustands-Überwachungsverfahren vorgestellt, auch als Condition-Monitoring-Verfahren bezeichnet, das sich vom Stand der Technik grundsätzlich unterscheidet. Es benutzt zur Auswertung grundsätzlich keine mechanischen bzw. geometrischen Mess-Größen wie Dehnungen, Verschiebungen, Beschleunigungen usw. in ihrer unmittelbar ermittelten Form, sondern es werden aus den gemessenen mehrdimensionalen transversalen und/oder longitudinalen und/oder torsionalen zeitbezogenen Bewegungen Eigenschwingungsspektren von Bauwerks- bzw. Brückenelementen bestimmt, vermessen und bewertet.

Eine zentrale Einrichtung zur Zustandsüberwachung ist vorgesehen, die als Condition-Monitoringsystem-Zentrale bezeichnet wird und ggf. Monitoring-Systeme mehrerer Bauwerke zusammenfasst und betreut.

Bewertungsgrundlage sind auftretende Veränderungen in den gemessenen Schwingungsspektren, die auf jeden Fall Veränderungen der geometrischen und mechanischen Eigenschaften in dem vermessenen Element ihre Ursache haben. Damit kann eine Aussage über das gesamte Element getroffen werden, ohne zahlreiche räumliche Vermessungen von geometrischen oder mechanischen Daten vornehmen zu müssen. Physikalisch ist bekannt, dass Schäden an der Tragstruktur sich in der Regel in Veränderungen in den niedrigen Eigenfrequenzen äußern. Tritt eine solche Veränderung auf, muss dies Anlass sein, das Element genauer, z. B. visuell, zum Zeitpunkt des Auftretens der Veränderung zu untersuchen sowie Maßnahmen einzuleiten und nicht wie bisher in langfristigen Zeiträumen von Jahren.

Es hat sich als vorteilhaft erwiesen, wenn die Messungen an oder in den Bauwerkselementen, beispielsweise Brückenelementen, mittels dauerhaft, ggf. redundant integrierter, in der Regel aber zumindest für Reparaturzwecke auswechselbarer Sensoren erfolgen. Damit entfällt der Aufwand für Auf- und Abbau einer Messeinrichtung, es können zu jeder Zeit Messwerte genommen und ausgewertet werden und eine dichte Anbindung an die überwachte Struktur im Interesse einer genauen Datenerfassung wird möglich. Als Sensoren sind bevorzugt Beschleunigungs- und/oder Weg- und/oder verschiedene Dehnungssensoren, darunter faseroptische Sensoren, vorgesehen, die zusätzlich Zeitsignale aufnehmen bzw. die Messwerte mit einem Zeitstempel gekoppelt erfassen.

Nach einer ersten einfachen methodischen Variante erfolgt die Messung in einem begrenzten Zeitraum für Kontrollzwecke von einzelnen Bauwerks- bzw. Brückenelementen, was auch mit einer transportablen, autarken Messeinrichtung durchgeführt werden kann. Nach einer zweiten Variante, die als bevorzugte Hauptvariante vorgesehen ist, erfolgt die Messung dauerhaft. Die jeweiligen in der Regel digitalen Messungen der Zeitsignale erfolgen in Intervallen, mit denen die für die Bau- bzw. Brückenelemente zu messenden Frequenzen entsprechend dem Abtasttheorem dann erfasst werden können.

Mit Hilfe der transportablen, autarken Messeinrichtung kann auch eine akute Überwachung zur Kontrolle, ggf. auch nur eines Bauwerkselements, vorgenommen werden. Die Sensoren werden an dem Bauwerkselements angeordnet und mit der Messeinrichtung verbunden. In der zugehörigen Auswerteinrichtung erfolgt unmittelbar eine Auswertung, wobei auch eine Übertragung zur Auswertung und Speicherung möglich und vorgesehen ist.

Es hat sich weiterhin als vorteilhaft erwiesen, dass zusätzlich auch Messungen äußerer Bedingungen wie von Außenluft- und Bauwerkstemperaturen, von Außenluft- und Bauwerksfeuchtigkeit sowie von Windgeschwindigkeiten, Niederschlägen und Sonnenstrahlung, soweit erforderlich, durchgeführt werden. Damit können witterungsbedingte Einflüsse und ggf. auch Windlasten bei der Auswertung mit berücksichtigt werden.

Grundlage für eine bevorzugte Ausgestaltung des erfindungsgemäßen Verfahrens ist, dass bei der Messung von Schwingungen die ermittelten Schwingungsspektren nach den oben genannten äußeren Bedingungen bereichsweise klassifiziert angeordnet und abgespeichert werden. Damit wird es einerseits möglich, Schwingungsspektren gleicher Klassifizierung, also bei gleichen äußeren Bedingungen, untereinander zu vergleichen und Veränderungen festzustellen bzw. herauszufiltern, die dann nur durch Veränderungen des Zustands des vermessenen Brückenelements hervorgerufen werden.

Des Weiteren werden die gemessenen Schwingungsspektren mit normativen Schwingungsspektren in den jeweilig zutreffenden klassifizierten Bereichen verglichen. Die normativen Schwingungsspektren können entweder aus über einem längeren Zeitraum gemessenen stabilen Schwingungsspektren von einem Bauwerks- oder Brückenelement ohne Zustandsstörungen oder aus Modellrechnungen nach bekannten Verfahren für die Bauwerkselemente, insbesondere Brückenelemente, gewonnen werden.

Nach einer vorteilhaften Ausgestaltung des erfindungsgemäßen Verfahrens werden nach Beginn der Überwachungsphase beim Auftreten von Änderungen im Schwingungsspektrum Hinweise auf zugehörige Schäden oder bauliche Veränderungen ermittelt, was durch dann veranlasste Begehungen verifiziert werden kann.

Alternativ werden typische Änderungen im Schwingungsspektrum aus Modellrechnungen gewonnen, in denen Bauwerksschäden simuliert werden. Bevorzugt werden aus den Differenzen zwischen den gemessenen und den normativen Schwingungsspektren Rückschlüsse zu auftretenden Bauwerksschäden und deren Umfang, ob schwache oder starke - in der Regel die Tragstruktur betreffende - Schäden, gezogen. Die Differenzen zwischen den gemessenen und den normativen Schwingungsspektren werden besonders bevorzugt mittels spezieller Software, in Echtzeit oder während nachfolgender Auswertezeiträume, bevorzugt softwarebasierter Nachauswertungen, ggf. mit manueller Unterstützung ermittelt.

Eine vorteilhafte Ausgestaltung des erfindungsgemäßen Verfahrens sieht auch eine Detektion von Situationen und die Ableitung geeigneter Maßnahmen vor, in denen Teile eines Schwingungsspektrums in ihrer Anordnungsgesamtheit - einer Abfolge von mehreren Spektrum-Peaks - gleichbleiben, sich aber zumindest in Gruppen verschieben bzw. verschoben haben. Aus einer solchen Verschiebung kann abgelesen werden, dass sich die Baustoffe, beispielsweise Beton oder Stahl, in ihren mechanischen Kennwerten verändert haben.

Weitere Auswertungen sind vorstellbar, z. B. die Bestimmung der Schwingungsenergie eines Bauwerkselements und deren Veränderung.

Aus den ermittelten Veränderungen können geeignete Maßnahmen zur Wiederherstellung der Funktionalität oder eine Sperrung des Bauwerks von der weiteren Nutzung abgeleitet werden. In dem Fall, dass den aufgetretenen Veränderungen der Schwingungsspektren keine bisher bekannten Schäden zugeordnet werden können, wird die Entscheidung getroffen, dass eine Inspektion auszuführen ist oder - wenn vorhanden - wird mittels Modellrechnungen versucht, den Veränderungen der Schwingungsspektren zuordenbare Schäden zu simulieren. Auf jeden Fall werden erforderliche Maßnahmen zur Sicherung der Nutzung sowie der Funktionalität der Bauwerkselemente bestimmt und vorgenommen.

Mit einer weiteren vorteilhaften Ausgestaltung des erfindungsgemäßen Verfahrens kann aus den Schwingungsamplituden von vorgewählten Eigenfrequenzen bzw. den Schwingungsspektren die Höhe und die Anzahl Belastungszustände des Bauwerks, insbesondere der Brücke, bzw. einzelner Bauwerkselemente ermittelt und eine Langzeitstatistik aufgestellt werden, aus der sich Aussagen über eine Langzeitbelastung und damit über eine Lebensgrenzdauer des Bauwerks, insbesondere der Brücke, ableiten lassen.

Vorteilhafterweise werden Meldungen über Veränderungen der Schwingungsspektren, bevorzugt in Echtzeit, zu der wenigstens einen eingerichteten Condition-Monitoringsystem-Zentrale zur automatischen und/oder manuellen Einleitung von entsprechenden Reaktionen abgesetzt, wenn die Veränderungen der Schwingungsspektren einen Schwellenwert überschreiten und damit Schadenserkenntnisse gewonnen werden. Dazu kann die Meldung an den Betreiber des Bauwerks übermittelt werden, der daraufhin Maßnahmen einleitet.

Ein weiterer Aspekt der Erfindung betrifft eine Einrichtung zur Überwachung des Zustands eines Bauwerks, insbesondere einer Brücke, wobei wenigstens ein Sensor zumindest für eine Messung von Schwingungen wenigstens eines Bauwerkselements und eine Auswerteeinheit zur Bestimmung von Schwingungsspektren des wenigstens einen Bauwerkselements vorgesehen sind. Zumindest eine Eigenfrequenz wird berücksichtigt. Die Sensoren sind zur permanenten Überwachung des Zustands des Bauwerks zumindest an den wichtigsten Stellen angeordnet. Nach der Erfindung sind eine Messung der Schwingungen und eine Bestimmung der gesamten Eigenschwingungen von Bauwerkselementen, insbesondere von Brückenbögen, von Spannseilen und Spannelementen und Pfeilern in mindestens einer Schwingungsrichtung, vorgesehen.

Die mit den Sensoren gewonnenen Messwerte werden zu einer am Bauwerk befindlichen Einrichtung, die die Messeinheit und die Auswerteeinheit umfasst, übertragen. Die Messwerte und die Auswerteergebnisse werden von dort durch eine Kommunikationseinheit mit Methoden zu der Condition-Monitoringsystem-Zentrale übertragen, die dem Stand der Technik entsprechen, bevorzugt über Internet-Kommunikation, und strukturiert und gesichert abgespeichert. Dann erfolgt dort eine Verarbeitung im Sinne einer Zustandsbewertung.

In dieser Zentrale werden die Daten des Bauwerks gesichert abgespeichert und einer ggf. erforderlichen weiteren automatischen und/oder manuellen Auswertung unterzogen. Die Zentrale versendet bei Ereignissen, die einen voreingestellten Toleranzbereich von Messwerten bzw. aus den Messwerten ermittelten Werten überschreiten, Meldungen an den Betreiber des Bauwerks, damit erforderliche Maßnahmen bis hin zur Untersagung der Nutzung des Bauwerks vorgenommen werden können. Der Betreiber hat die Möglichkeit, über gesicherte Zugriffe auf die Daten des Bauwerks sich selbst ein Bild vom Zustand des Bauwerks zu machen und in Kommunikation mit der Zentrale zu treten.

Anhand der Beschreibung des Ausführungsbeispiels und seiner Darstellung in der zugehörigen Zeichnung wird die Erfindung nachfolgend näher erläutert.

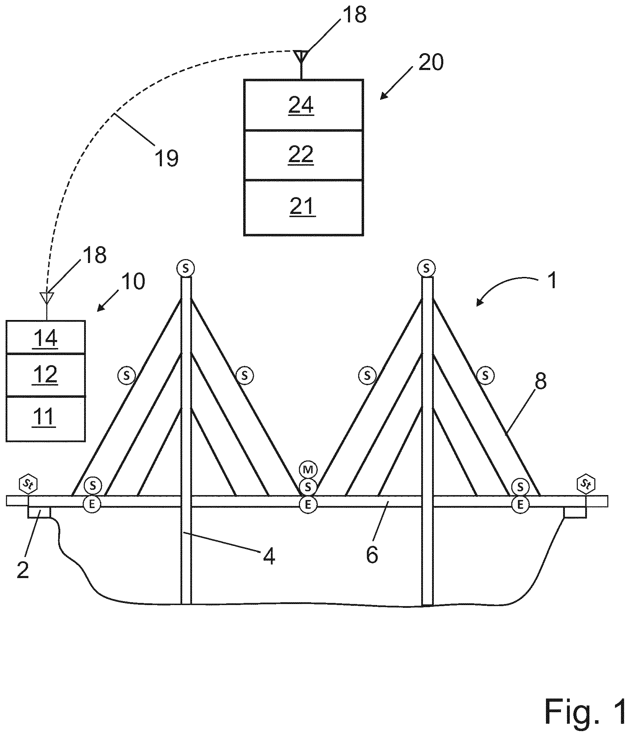

Fig. 1 zeigt eine schematische Seitenansicht eines Bauwerks 1, einer Brücke mit den Bauwerkselementen Auflager 2, Pfeiler 4, einer Fahrbahn 6 und Abspannseilen 8, die mit einer Ausführungsform einer erfindungsgemäßen Einrichtung zur Überwachung ausgestattet ist.

Schwingungssensoren S ermitteln der Bewegungssignale von den Bauwerkselementen 4, 6, 8 in mehreren Freiheitsgraden, wie die Lage der Bewegung bzw. die Schwingungsrichtung, die in einer bis drei Dimensionen sowie Torsion vorliegen können. Aus den Zeitsignalen werden für jeden Freiheitsgrad die Schwingungsspektren durch eine Transformation bestimmt. Die Schwingungssensoren S sind an Bauwerkselementen, hier den Pfeilern 4, der Fahrbahn 6 und den Abspannseilen 8, angeordnet. Weiterhin ist wenigstens ein Meteorologiesensor M zur Ermittlung von Temperatur, Feuchtigkeit, Regen, Wind und Strahlung vorgesehen. Außerdem ist wenigstens ein Bauwerkssensor E vorgesehen, der zumindest Temperatur und Feuchtigkeit des Bauwerkselements 4, 6, 8, an dem er an geeigneter Stelle angebracht ist, ermittelt.

Die Messwerte der Schwingungssensoren S, der Meteorologiesensoren M und der Bauwerkssensoren E sind mit einer Mess-, Auswerte und Kommunikationseinheit 10 verbunden, die die Sensoren S, M , E steuert, überwacht und deren Messwerte temporär aufnimmt und sicher abspeichert. Von der Messeinheit 11 werden die Messewerte an eine Auswerteeinheit 12 übergeben. Dort werden aus dem Werten, die die Schwingungssensoren S bereitstellen, die Schwingungsspektren ermittelt und mit Referenzwerten, insbesondere den normativen Schwingungsspektren verglichen oder nach anderen Methoden bewertet.

Auch die Bereitstellung der normativen Schwingungsspektren aus Modellrechnungen oder aus einer Langzeitbetrachtung erfolgt in der Auswerteeinheit 12. Dort können auch die Rückschlüsse aus einer Langzeitstatistik auf Basis der über eine lange Messdauer gewonnenen Schwingungsspektren gezogen werden.

Eine Kommunikationseinheit 14 übermittelt Meldungen an eine Zentrale, eine Condition-Monitoringsystem-Zentrale 20, über eine Funk- oder Internetverbindung 19 mit Sende- und Empfangseinrichtungen 18. In der Condition-Monitoringsystem-Zentrale 20 können auch eine Bereitstellung der normativen Schwingungsspektren und die Langzeitbetrachtung erfolgen. Hierzu weist die Condition-Monitoringsystem-Zentrale 20 eine Datenspeichereinrichtung 21, eine Auswerteeinheit 22 und eine Kommunikationseinheit 24 auf.

Die Auswerteeinheit 12 ist auch mit lokalen Signalmitteln St verbunden, hier einem aktivierbaren Stoppsignal, um bei akutem Schaden sofort den Verkehr über die Brücke zu stoppen und Folgeschäden zu vermeiden. Zusätzlich kann eine situationsbedingte Lenkung des Verkehrs vorgesehen werden, wie z. B. Beschränkung des Verkehrs bei hohen zusätzlichen Lasten, oder durch Wind oder Eis an den Bauwerks- bzw. Brückenelementen, z. B. den Abspannseilen.

Beim Bauwerk 1 befindet sich nach einer vorteilhaften Weiterbildung eine Mess-, Auswerte und Kommunikations-Einheit 10 des Bauwerks 1. In der zugehörigen Messeinheit 11 werden die Messdaten von den Schwingungssensoren S in Intervallen nach dem Abtasttheorem für die zu messenden Frequenzen sowie die Messwerte der Meteorologiesensoren M und der Bauwerkssensoren E abgerufen, geprüft und grundsätzlich fortwährend temporär für einen Zeitraum sicher gespeichert. Von der Messeinheit 11 werden auch Daten an die Signalmittel St ausgegeben, mit denen Warnungen oder Sperrungen am Bauwerk 1, insbesondere bei Brücken, angezeigt werden, die sich aus der Auswertung in der Auswerteeinheit 12 und/oder 22 ergeben.

In der Auswerteeinheit 12 werden die aus den Zeitwerten der Messungen erstellten Schwingungspektren nach den vorgesehenen Verfahrensschritten hinsichtlich Veränderungen geprüft und mit Auswertekennzeichen versehen. Die Schwingungsspektren mit Auswertekennzeichen werden über die Kommunikationseinheit 14 über die Sende- und Empfangseinrichtungen 18 nach Verfahren entsprechend dem Stand der Technik einer Funk- oder Internetverbindung 19 an die Condition-Monitoringsystem-Zentrale 20 übermittelt.

In der Condition-Monitoringsystem-Zentrale 20 erfolgt in der zugehörigen Datenspeichereinrichtung 21 eine gesicherte Langzeitspeicherung der übertragenen Daten. In der Auswerteeinheit 22 werden die Zustands-Auswertungen von den Mess-, Auswerte und Kommunikations-Einheiten 10 softwarebasiert und ggf. manuell verifiziert und verfeinert. Zudem wird dort auch die Langzeit-Auswertungen durchgeführt.

Die Auswerteeinheit 22 verfügt über eine numerische und grafische Darstellung der Auswertungen. Auf diese kann auch der Betreiber des Bauwerks 1 oder von ihm Beauftragte passwortgeschützt über eine Website zugreifen. Die Kommunikationseinheit 24 sichert bei auftretenden Schadzuständen eine Information in Form von SMS, Telefon oder anderen schnellen Kommunikationswegen nach dem jeweiligen Stand der Technik eine Information zur Schadzustandserkennung in Echtzeit an den Betreiber und sendet auch die erforderlichen Signale an das Bauwerk 1 zur Ausgabe an die Signalmittel St, insbesondere eine Warn- und Sperr-Anzeige.

An die Condition-Monitoringsystem-Zentrale 20 können mehrere Mess-, Auswerte und Kommunikations-Einheiten 10 von mehreren Bauwerken 1 angeschlossen und deren Daten bauwerksweise verarbeitet werden.

## Patentansprüche

1. Verfahren zur Überwachung des baulichen Zustands eines Bauwerks an wenigstens einer Stelle mittels wenigstens einem Sensor, mit dem Schwingungsspektren des Bauwerks bestimmt und aus deren Bewertung Erkenntnisse zum baulichen Zustand gewonnen werden, **dadurch gekennzeichnet, dass** für wenigstens ein Bauwerkselement (4, 6, 8) zumindest Schwingungen mittels wenigstens eines Schwingungssensors (S) gemessen und aus den Messergebnissen wenigstens ein Schwingungsspektrum in wenigstens einer Schwingungsrichtung bestimmt werden, wobei das Schwingungsspektrum zumindest eine Eigenfrequenz berücksichtigt und in Hinsicht auf Abweichungen gegenüber einer Referenz, die Rückschlüsse auf bauliche Veränderungen des Bauwerkselements ermöglichen, bewertet wird.

2. Verfahren nach Anspruch 1, wobei die zumindest eine Messung an oder in dem wenigstens einen Bauwerkselement (4, 6, 8) erfolgt, wobei der wenigstens eine Schwingungssensor (S) dauerhaft installiert ist und die Messwerte an eine Messeinheit und eine Auswerteeinheit, die ebenfalls dauerhaft installiert sind, übertragen werden oder wobei der wenigstens eine Schwingungssensor (S) zumindest über eine Messdauer an oder in dem wenigstens einen Bauwerkselement (4, 6, 8) angebracht ist und die Messwerte an eine Mess- und Auswerteeinheit, die für die Messdauer installiert wurde, übertragen werden.

3. Verfahren nach einem der vorherigen Ansprüche, wobei die zumindest eine Messung in begrenzten Zeiträumen oder dauerhaft jeweils in Intervallen, in denen die Frequenzen der für das wenigstens eine Bauwerkselement (4, 6, 8) zu messenden Schwingungen entsprechend dem Abtasttheorem erfasst werden können, erfolgt.

4. Verfahren nach einem der vorherigen Ansprüche, wobei wenigstens ein Meteorologiesensor (M) vorgesehen ist, der eine Messung einer Außenlufttemperatur, einer Außenluftfeuchtigkeit, von Windgeschwindigkeit, Niederschlag und/oder Sonnenstrahlung durchführt, und/oder wenigstens ein Bauwerkssensor (E) vorgesehen ist, der eine Messung von Bauwerkstemperaturen und/oder von Bauwerksfeuchtigkeit durchführt.

5. Verfahren nach einem der vorherigen Ansprüche, wobei bei der wenigstens einen Messung von Schwingungen die ermittelten Messwerte bereichsweise klassifiziert strukturiert angeordnet abgespeichert werden, wobei die Bereiche gemäß den Messwerten von Meteorologie-Sensor (M) und/oder Bauwerkssensor (E) ausgewählt werden.

6. Verfahren nach Anspruch 5, wobei die aus den Schwingungen ermittelten Schwingungsspektren mit normativen Schwingungsspektren in den jeweils zutreffenden klassifizierten Bereichen für die Bauwerkselemente (4, 6, 8) verglichen werden.

7. Verfahren nach Anspruch 6, wobei die normativen Schwingungsspektren entweder aus über einen längeren Zeitraum nach Beginn der Messung ermittelten Schwingungsspektren oder aus Modellrechnungen für die Bauwerkselemente (4, 6, 8) gewonnen werden.

8. Verfahren nach einem der Ansprüche 6 oder 7, wobei zur Bewertung des Schwingungsspektrums während einer Überwachungsphase beim Auftreten von Änderungen im Schwingungsspektrum des Bauwerkselements (4, 6, 8) im Vergleich zu den normativen Schwingungsspektren zugehörige bauliche schadhafte Veränderungen zugeordnet werden oder es werden Änderungen im Vergleich zu einem aus Modellrechnungen gewonnenen Schwingungsspektrum, in denen Bauwerksschäden simuliert werden, bewertet.

9. Verfahren nach Anspruch 8, wobei aus den Differenzen zwischen den gemessenen und den normativen Schwingungsspektren in Echtzeit oder in nachfolgenden Auswertezeiträumen Rückschlüsse zu aufgetretenen Bauwerksschäden gezogen werden.

10. Verfahren nach einem der vorherigen Ansprüche, wobei in dem Fall, dass aus den Schwingungsspektren Peakgruppen, die in ihrer Anordnungsgesamtheit grundsätzlich gleich bleiben, sich aber zumindest als Peakgruppe verschieben, abgelesen wird, dass sich Baustoffe in ihren mechanischen Kennwerten verändern, und geeignete Maßnahmen abgeleitet werden.

11. Verfahren nach einem der vorherigen Ansprüche, wobei von einer am Bauwerk (1) angeordneten Mess-, Auswerte und Kommunikationseinheit (10), umfassend eine Auswerteeinheit (12), die mit einer die gemessenen Schwingungen aufnehmenden Messeinheit (11) zusammenwirkt, Messdaten und Auswerteergebnisse temporär über einen Zeitraum sicher abgespeichert und auch mittels einer Kommunikationseinheit (14) an wenigstens eine entfernte Condition-Monitoringsystem-Zentrale (20) gesandt und dort sicher gespeichert werden und weiterhin einer softwaregestützten automatisierten Auswertung und/oder einer manuellen Begutachtung der Messwerte und der Auswerteergebnisse zugeführt werden.

12. Verfahren nach einem der vorherigen Ansprüche, wobei Meldungen über Veränderungen der Schwingungsspektren zu dem wenigstens eine Condition-Monitoringsystem-Zentrale (20) zur automatischen und/oder manuellen Einleitung von entsprechenden Reaktionen abgesandt werden, wenn die Veränderungen der Schwingungsspektren einen Schwellwert überschreiten und damit Erkenntnisse über einen Schaden oder einen Schadensverdacht am Bauwerk (1) gewonnen werden.

13. Verfahren nach einem der vorherigen Ansprüche, wobei aus Schwingungsamplituden der Schwingungsspektren die Höhe und die Anzahl von Belastungszuständen des Bauwerks (1) ermittelt werden und eine Langzeitstatistik aufgestellt wird, aus der sich Aussagen über die eine Langzeitbelastung und damit über eine Grenz-Lebensdauer des Bauwerks (1) ableiten lassen.

14. Einrichtung zur Überwachung des Zustands eines Bauwerks an wenigstens einer Stelle mittels wenigstens eines Sensors, **dadurch gekennzeichnet, dass** wenigstens ein Schwingungssensor (S) zumindest für eine Messung von Schwingungen wenigstens eines Bauwerkselements (4, 6, 8) und eine Mess- und Auswerteeinheit (10) zur Bestimmung wenigstens eines Schwingungsspektrums des wenigstens einen Bauwerkselements (4, 6, 8), wobei zumindest eine Eigenfrequenz berücksichtigt wird, vorgesehen sind.

15. Einrichtung nach Anspruch 14, wobei eine Condition-Monitoringsystem-Zentrale (20) vorgesehen ist, an die die Schwingungsspektren über die Kommunikationseinheit (14) übermittelt werden, wobei die Condition-Monitoringsystem-Zentrale (20) eine Datenspeichereinrichtung (21) zur Langzeitspeicherung der übertragenen Daten, eine Auswerteeinheit (22) zur Auswertung des Zustands des Bauwerks (1) und deren Darstellung sowie eine Kommunikationseinheit (24), die bei auftretenden Schäden eine Information an den Betreiber und Signale an Signalmittel (St) des Bauwerks (1) in Echtzeit sichert, umfasst.
